# EUROPEAN PATENT SPECIFICATION

(11) **EP 3 538 288 B1**
(45) Date of publication and mention of the grant of the patent: **02.11.2022**
(21) Application number: 17866331.6
(22) Date of filing: 24.10.2017
(51) Int. Cl.: A47J 37/00, A47J 37/07, B06B 3/00, F23B 99/00, B06B 1/12, F23C 99/00

(54) **AN INFRASOUND GENERATOR FOR ENHANCING THE COMBUSTION OF SOLID FUELS**
INFRASCHALLGENERATOR ZUR VERBESSERUNG DER VERBRENNUNG VON FESTEN BRENNSTOFFEN
GÉNÉRATEUR D'INFRASONS POUR AMÉLIORER LA COMBUSTION DE COMBUSTIBLES SOLIDES

(30) Priority: 31.10.2016 SE 1600303
(43) Date of publication of application: 18.09.2019
(73) Proprietor: Olsson, Mats, 181 51 Lidingö (SE)
(72) Inventor: Olsson, Mats, 181 51 Lidingö (SE)
(74) Representative: Theander, Anna Katarina Henrietta
(86) International application number: PCT/SE2017/000041
(87) International publication number: WO 2018/080367

(56) References cited:
- EP-A1- 1 542 810
- EP-A2- 0 144 918
- EP-B1- 0 197 934
- EP-B1- 0 197 934
- EP-B1- 1 542 810
- WO-A1-90/00093
- DE-B- 1 031 461
- GB-A- 214 616
- JP-B2- 5 507 132
- SE-B- 456 524

## Description

The present invention relates to an infrasound generator for enhancing the combustion of solid fuels according to claim 1.

It is known from, among others, the patent SE 461 896 that infrasound can be used for enhancing combustion of solid fuels. In addition, EP0197934 discloses a combustion apparatus with an infrasonically intensified glow bed, supported by a grate.

FIG 1 of said patent application shows that the infrasound generator may be attached to the down pipe below the support grate of the burning fuel.

There are, however, a couple of problems associated with that type of infrasound generators.

One problem is that the infrasound generates vibrations.

Another problem is that it is difficult to generate enough acoustic power.

A third problem is that it is a risk that soot and ash particles from the combustion process enters into the infrasound generator.

A fourth problem is that heat from the combustion process may be transferred from the combustion process to the infrasound generator, resulting in too high temperature of the infrasound generator.

The object of the present invention is to provide an infrasound generator according to claim 1 that overcomes the problems mentioned above.

The infrasound generator of the present invention is characterized in that it comprises one or more set(-s) of identical, parallel vibrating plates moving in the same direction but in antiphase. These vibrating plates generate an infrasound, but they do not cause vibrations as they move in the same direction, with the same displacement amplitude but in antiphase.

Each vibrating plate is mounted at a sound chamber. The two sound chambers of one set are mounted opposite each other at the down pipe below the combustion chamber.

The combustion is enhanced by a direct infrasound, which means that the travelling distance of the infrasound from the vibration plates to the burning solid fuel is much less than the wavelength of the infrasound, preferably less than one eighth of the wavelength of the infrasound.

The present description is now to be explained more closely by means of embodiments, which are disclosed as examples, and with reference to attached drawings.
Fig. 1 is a cross sectional sketch of the infrasound generator and the combustion chamber.

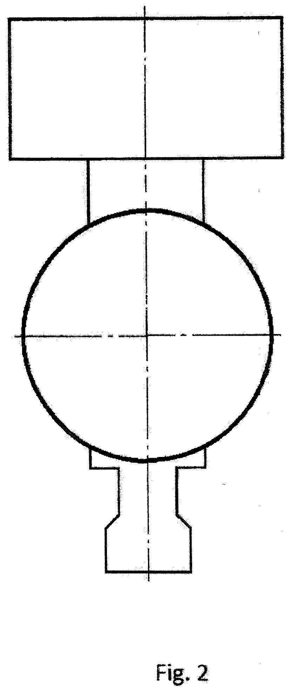

Fig. 2 is a side view of Fig. 1.

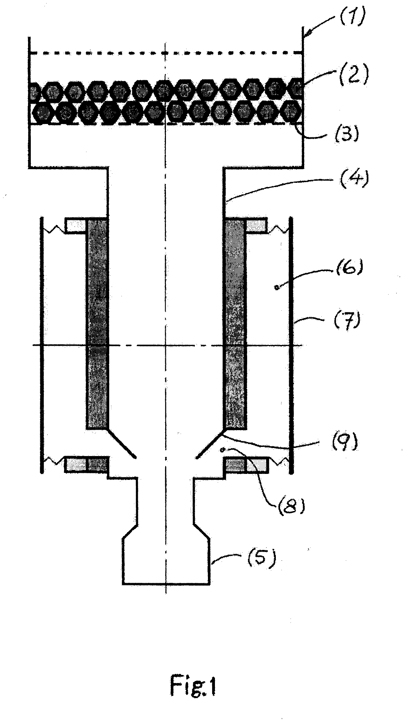

Fig. 1 shows a combustion chamber (1) containing solid fuel (2) supported by a grate (3).

A vertical down pipe (4) connects the combustion chamber (1) to the ash pot (5).

The figure also shows a set of two sound chambers (6) situated opposite each other at each side of the down pipe (4). Vibrating plates (7) are mounted at each of the sound chambers (6).

There are connections (8) for the flow of infrasound between the sound chambers (6) and the down pipe (4).

There are flaps (9) preventing ash from the combustion to enter the sound chambers (6) via the openings (8).

The benefits of this invention are:
- The set(-s) of two plates (7) vibrating in the same direction with the same displacement amplitude but in antiphase does not cause vibrations.
- It is possible to generate a high acoustic power due to the fact that the design includes two or more vibration plates (7).
- The flaps (9) prevents ash particles from the combustion to enter into the sound cambers (6).
- The connections (8) have no pockets that could be filled by ach particles.
- There is a long distance from the burning solid fuel (2) to the vibrating plates (7) via the connections (8).

## Claims

1. An infrasound generator for enhancing the combustion of solid fuels (2) burning in a combustion chamber (1), equipped with a vertical down pipe (4), a plurality of sound chambers (6) and connections (8) for the flow of infrasound between said sound chambers and said down pipe (4);
**characterized in that**
said infrasound generator comprises one or more set(-s) of each two vibrating plates (7), each of said vibrating plate (7) of said set, situated parallel to each other, vibrating in the same direction with the same displacement amplitude but in antiphase;
each of said vibrating plate (7) of said one or more set(-s) is connected to one of said plurality of sound chambers (6);
said down pipe (4) is situated between said sound chambers (6) and
that there are flaps (9) in front of the connections (8) preventing ash particles from the combustion to enter into the sound chambers (6).

2. An infrasound generator according to claim 1
**characterized in that**
the connections (8) between said sound cambers (6) and said down pipe (4) have no pockets where ash particles can fill up.

3. An infrasound generator according to claim 1 or 2
**characterized in that** the frequency of the sound generated by said infrasound generator is between 7 to 19 Hz.

4. An infrasound generator according to claim 3
**characterized in that**
the frequency of the sound generated by said infrasound generator is between 11 to 16 Hz.

## Patentansprüche

1. Infraschallgenerator zur Verbesserung der Verbrennung von festen Brennstoffen (2), die in einer Brennkammer (1) verbrennen, ausgestattet mit einem senkrechten Fallrohr (4), einer Vielzahl von Schallkammern (6) und Verbindungen (8) für den Fluss von Infraschall zwischen den Schallkammern und dem Fallrohr (4);
**dadurch gekennzeichnet, dass**
der Infraschallgenerator einen oder mehrere Sätze von jeweils zwei Vibrationsplatten (7) umfasst, wobei jede der Vibrationsplatten (7) des Satzes, die parallel zueinander angeordnet sind, in der gleichen Richtung mit der gleichen Verschiebungsamplitude aber in Gegenphase vibrieren;
jede der Vibrationsplatten (7) des einen oder der mehreren Sätze mit einer der Vielzahl von Schallkammern (6) verbunden ist;
das Fallrohr (4) zwischen den Schallkammern (6) angeordnet ist und
sich vor den Verbindungen (8) Klappen (9) befinden, die verhindern, dass Aschepartikel aus der Verbrennung in die Schallkammern (6) gelangen.

2. Infraschallgenerator nach Anspruch 1,
**dadurch gekennzeichnet, dass**
die Verbindungen (8) zwischen den Schallkammern (6) und dem Fallrohr (4) keine Taschen aufweisen, in denen sich Aschepartikel füllen können.

3. Infraschallgenerator nach Anspruch 1 oder 2,
**dadurch gekennzeichnet, dass**
die Frequenz des von dem Infraschallgenerator erzeugten Schalls zwischen 7 und 19 Hz liegt.

4. Infraschallgenerator nach Anspruch 3,
**dadurch gekennzeichnet, dass**
die Frequenz des von dem Infraschallgenerator erzeugten Schalls zwischen 11 und 16 Hz liegt.

## Revendications

1. Un générateur d'infrasons pour améliorer la combustion de combustibles solides (2) brûlant dans une chambre de combustion (1), équipé d'un tuyau de descente vertical (4), d'une pluralité de chambres acoustiques (6) et de liaisons (8) pour le flux d'infrasons entre lesdites chambres acoustiques et ledit tuyau de descente (4) ;
**caractérisé en ce que**
ledit générateur d'infrasons comprend un ou plusieurs ensemble(s) de chacune de deux plaques vibrantes (7), chacune desdites plaques vibrantes (7) dudit ensemble, situées parallèlement l'une à l'autre, vibrant dans la même direction avec la même amplitude de déplacement mais en antiphase ;
chacune desdites plaques vibrantes (7) dudit ou desdits ensemble(s) étant connectée à une chambre acoustique de ladite pluralité de chambres acoustiques (6) ;
ledit tuyau de descente (4) étant situé entre lesdites chambres acoustiques (6) et
**en ce qu'**il y a des volets (9) devant les liaisons (8) empêchant les particules de cendre provenant de la combustion de pénétrer dans les chambres acoustiques (6).

2. Un générateur d'infrasons selon la revendication 1,
**caractérisé en ce que**
les liaisons (8) entre lesdites chambres acoustiques (6) et ledit tuyau de descente (4) ne comportent pas de poches dans lesquelles les particules de cendre peuvent se remplir.

3. Un générateur d'infrasons selon la revendication 1 ou la revendication 2, **caractérisé en ce que** la fréquence du son généré par ledit générateur d'infrasons est comprise entre 7 et 19 Hz.

4. Un générateur d'infrasons selon la revendication 3,
**caractérisé en ce que**
la fréquence du son généré par ledit générateur d'infrasons est comprise entre 11 et 16 Hz.
